# EUROPEAN PATENT SPECIFICATION

(11) **EP 1 335 068 B1**
(45) Date of publication and mention of the grant of the patent: **05.09.2007**
(21) Application number: 02013158.7
(22) Date of filing: 14.06.2002
(51) Int. Cl.: D21H 27/26, D21H 27/40, B44C 5/04

(54) **Decorative laminate**
Dekorlaminat
Laminé décoratif

(30) Priority: 07.02.2002 US 683735
(43) Date of publication of application: 13.08.2003
(73) Proprietor: Premark RWP Holdings, Inc., Wilmington, Delaware 19801 (US)
(72) Inventor: Krebs, Robert R., Georgetown, TX 78628 (US); Phelps, Ernest L., Waco, TX 76706 (US); Billeck (Jnr.), Billy Joe, Rogers, TX 76569 (US); Ingrim, Michael E., Belton, TX 76513 (US); Canady, Virgil B., Temple, TX 76501 (US)
(74) Representative: Parry, Simon James

(56) References cited:
- FR-A- 2 379 387

## Description

### Background of Invention

Field of the Invention

The invention relates to decorative laminates. More particularly, the invention relates to the use of stretchable, resin impregnated kraft and decorative papers in the manufacture of compound formable decorative laminates which may be selectively molded in a three-dimensional manner.

Description of the Prior Art

Decorative laminates have found wide spread use as the ability to replicate natural materials has substantially improved over the years. For example decorative laminates have replaced natural materials in the construction of countertops, furniture, store fixtures, signage, column wraps, appliance fronts, push and kick plates, ceiling panels, residential cabinetry, wall panels, decorative trim and accents for restaurant/food service equipment.

The laminate industry is continually striving to improve the functionality of decorative laminates. These advances in decorative laminate manufacturing make these materials equal to, or better than, the materials they are designed to replace.

Decorative laminates generally include plural layers of synthetic resin impregnated paper sheets bonded under heat and pressure to form a unitary structure. In normal practice, a decorative laminate sheet assembly, from the bottom up, includes a core layer of one or more phenolic resin impregnated sheets, above which lies a decorative melamine impregnated sheet. The decorative sheet may be further covered with a melamine impregnated overlay.

A substrate may also be bound to the decorative laminate to impart rigidity thereto. The substrate may be a pre-cured plastic laminate, such as glass fiber-reinforced thermoset polyester resin laminates and the like, a wood product, such as hardboard, wood waste or particle boards, plywood and the like, a mineral base board, such as, cement-asbestos board, sheet rock, plaster board, and the like, or a combination of substrates.

Decorative laminates are generally manufactured by placing the resin impregnated core and decorative sheet between steel plates and subjecting the laminate stack to heat and pressure for a time sufficient to consolidate the laminate and cure the resins. The pressure and heat force the resin in the paper sheets to flow, cure, and consolidate the sheets into a unitary laminated mass referred to in the art as a decorative high pressure laminate. Finally, the formed decorative laminate is bonded to a reinforcing substrate, such as, plywood, hardboard, asbestos board, particle board or the like.

Unfortunately, the resins and papers utilized in the manufacture of prior decorative laminates limit one's ability to alter the shape of the cured decorative laminate (that is, through subsequent forming processes). This is not to say that decorative laminates are unbending and totally unsuited for any application requiring that the decorative laminate be formed around a non-planar surface. However, currently available decorative laminates are limited in their ability to be "wrapped" about substrates having substantial surface variations.

Since those skilled in the art have previously been unable to develop a decorative laminate well suited for forming operations, various techniques have been developed to compensate for conventional decorative laminate's inability to be formed about irregular and/or non-planar surfaces. These techniques have met with only limited success and fabricators of decorative laminate remain limited to post-forming decorative laminates in a very limited number of ways. Specifically, fabricators are currently only able to post-form decorative laminates about a single axis lying within a single plane (that is, two-dimensionally), for example, in the formation of work surface edges or unitary backsplash/work surface structures where the decorative laminate is post-formed about a single axis. That is, current post-forming techniques allow one to wrap decorative laminate about the edge of a countertop but are not sufficiently developed to permit wrapping of the laminate around a countertop corner.

Current techniques limit the molding of decorative laminates in a three-dimensional space. It is the inventors' understanding that high pressure decorative laminate is currently being formed over/onto three-dimensional surfaces limited to those having a principle radii of curvature > 12.7 mm (0.5 inches). As such, many structures well suited for decorative laminate surfacing cannot take advantage of the durability, cost and pleasing appearance offered by decorative laminates. For example, the intricate profiles of six panel doors, cabinet facings, ergonomic desktops, finials, etc., may not be surfaced with decorative laminates due to the current unavailability of a decorative laminate which may be compound formed about the three-dimensionally based profiles required by these structures.

This shortcoming of available decorative laminates currently limits the use of decorative laminates to relative flat surfaces or simple curved surfaces. As those skilled in the art certainly appreciate, the number of surfaces that might be surfaced with decorative laminates, if not for the irregular, or non-planar, nature of their surfaces, would be greatly enlarged if a compound formable decorative laminate were available. Unfortunately, such a decorative laminate is not known in the prior art.

There are a number of decorative surfacing materials that are conformable to ergonomic desktops, cabinet doors, etc. These include vinyls, powder coatings, low basis weight papers, and wood veneers. All of these materials have surface properties that are, in general, inferior to high pressure decorative laminates. This includes stain resistance, impact resistance, heat resistance, and scratch/scuff resistance. A high pressure decorative laminate that is also highly formable, would, therefore, represent a significant improvement in the current decorative surfacing art.

FR-A-2 379 387 discloses a traditional decorative laminate with a melamine impregnated decorative sheet of alpha cellulose paper and a phenolic impregnated kraft paper.

A need, therefore, exists for a decorative laminate offering characteristics making more elaborate compound forming processes possible without sacrificing the outstanding surface properties currently offered by high pressure decorative laminate. The present invention provides such a decorative laminate.

### Summary of Invention

It is, therefore, an object of the present invention to provide a compound formable decorative laminate. The laminate includes a resin impregnated decorative layer composed of a bilaterally stretchable decorative paper and a resin impregnated core layer composed of a bilaterally stretchable kraft paper.

It is also an object of the present invention to provide a laminate lay-up including a resin impregnated decorative layer composed of a bilaterally stretchable decorative paper and a resin impregnated core layer composed of a bilaterally stretchable kraft paper.

It is a further object of the present invention to provide a method of fabricating a compound formable decorative laminate. The method is achieved by preprocessing a decorative paper such that it is bilaterally stretchable, impregnating the preprocessed decorative paper with a resin, preprocessing a kraft paper such that it is bilaterally stretchable, impregnating the preprocessed kraft paper with a resin, layering the decorative paper and the kraft paper and consolidating the layered decorative paper and kraft paper under heat and pressure to form a sheet of decorative laminate.

It is another object of the present invention to provide a compound formable decorative laminate panel. The panel includes a resin impregnated decorative layer composed of a bilaterally stretchable decorative paper and a compound formable substrate.

It is still another object of the present invention to provide a decorative laminate panel including a compound formable decorative laminate having a resin impregnated decorative layer composed of a bilaterally stretchable decorative paper and a resin impregnated core layer composed of a bilaterally stretchable kraft paper. The panel also includes a substrate to which the decorative laminate is bound.

According to the present invention, there is provided a compound formable decorative laminate comprising:
a resin impregnated decorative layer composed of a bilaterally stretchable decorative paper which is capable of being stretched by at least 20%; and
a resin impregnated core layer composed of a bilaterally stretchable kraft paper which is capable of being stretched by at least 20%.

Preferably, the decorative paper is impregnated with a melamine resin.

Conveniently, the decorative paper is alpha cellulose paper.

Advantageously, the decorative paper has a resin content of approximately 30% to approximately 35%.

Preferably, the decorative paper is alpha cellulose paper impregnated win melamine resin to a resin content of approximately 30% to approximately 35%.

Advantageously, the core layer is impregnated with a phenolic resin.

Conveniently, the decorative paper is x creped so as to impart stretchability thereto.

Preferably, the kraft paper is x creped so as to impact stretchability thereto.

Preferably, the core layer includes multiple sheets of bilaterally stretchable kraft paper.

According to another aspect of the present invention, there is provided a laminate lay-up comprising a decorative laminate as defined above.

Preferably, the decorative laminate panel further includes a resin impregnated core layer positioned between the decorative layer and the substrate.

Conveniently, the core layer is composed of a bilaterally stretchable kraft paper.

Advantageously, the kraft paper is x creped so as to impart scretchability thereto.

Conveniently, the decorative laminate paper is z creped so as to impart stretchability thereto.

Other objects and advantages of the present invention will become apparent from the following detailed description when viewed in conjunction with the accompanying drawings, which set forth certain embodiments of the invention.

### Brief Description of Drawings

Figure 1 is a schematic of the present decorative laminate in accordance with a first embodiment of the present invention.

Figure 2 is a schematic of a compound forming process for a hemisphere utilized in accordance with the present invention.

Figure 3 is a schematic of a compound forming process for a "peanut" shape utilized in accordance with the present invention.

Figure 4 is a perspective view of a door panel formed in accordance with the present invention.

Figure 5 is a cross sectional view of the door panel shown in Figure 4.

Figure 6 is a top view of a tabletop formed in accordance with the present invention.

Figure 7 is a cross sectional view of the tabletop shown in Figure 6.

Figure 8 is a schematic of a compound formable low pressure decorative laminate formed in accordance with the present invention.

### Description of the Preferred Embodiments

The detailed embodiments of the present invention are disclosed herein. It should be understood, however, that the disclosed embodiments are merely exemplary of the invention, which may be embodied in various forms. Therefore, the details disclosed herein are not to be interpreted as limited, but merely as the basis for the claims and as a basis for teaching one skilled in the art how to make and/or use the invention.

The present invention relates to a decorative laminate that may be compound formed along three-dimensions, that is, a surface with two finite principle radii of curvature, via either expansion of the decorative laminate or contraction of the decorative laminate. The terms "compound formed", "compound formable" and variations thereof are used throughout the body of the present specification to describe the molding of decorative laminates in a three-dimensional space not limited to a single axis, that is, about multiple axes and with differing curvatures and radii.

The compound formable decorative laminate includes a resin impregnated decorative layer composed of a bilaterally stretchable decorative paper which may be stretched at least approximately 20% to 50% and a resin impregnated core layer composed of a bilaterally stretchable kraft paper which may be stretched at least approximately 20% to 50%. While specific ranges are disclosed above, papers which stretch as much as 100% are known in the prior art and could possibly be used in accordance with the present invention. The stretchable nature of the decorative paper and the kraft paper permits expansion and contraction of the decorative laminate as the laminate is compound formed in the manner discussed below.

The laminate is fabricated by preprocessing a decorative paper such that it is bilaterally stretchable, impregnating the preprocessed decorative paper with a resin, preprocessing a kraft paper such that it is bilaterally stretchable, impregnating the preprocessed kraft paper with a resin, layering the decorative paper and the kraft paper and consolidating the layered decorative paper and kraft paper under heat and pressure to form a sheet of decorative laminate.

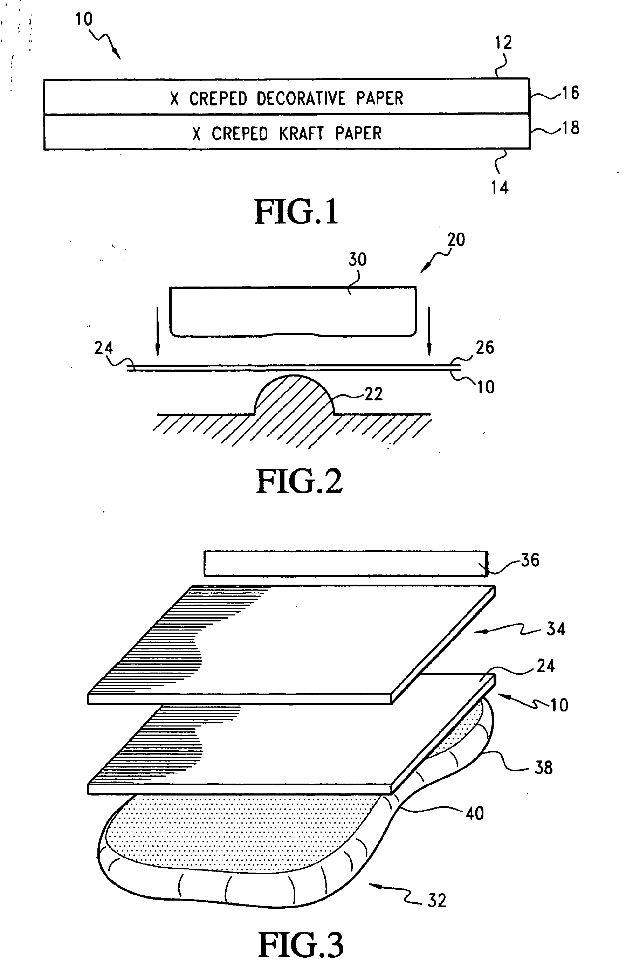

With reference to Figure 1, a decorative laminate 10 in accordance with the present invention is disclosed. The decorative laminate 10 includes a decorative layer 12 and a core layer 14. While a specific layering pattern is disclosed in accordance with a preferred embodiment of the present invention, the layering pattern may be varied, somewhat, without departing from the scope of the present invention.

The decorative layer 12 is a patterned decorative paper sheet 16 positioned directly above the core layer 14. The decorative layer 12 is substantially responsible for the aesthetic appearance of the finished decorative laminate 10. Decorative layers may be chosen from a wide array of sheets. For example, the decorative layer may be a solid color (for example, white) or include an aesthetically appealing pattern.

As discussed above, the decorative layer 12 provides the laminate 10 with an attractive appearance. Where the decorative layer 12 forms the outer surface of the laminate 10, the decorative layer 12 will also dictate the surface characteristics of the final decorative laminate 10. For example, the composition of the decorative layer 12 helps to dictate the decorative laminate's resistance to chemical agents, heat, light, shock and abrasion.

In accordance with the present invention, the decorative layer 12 is composed of a single sheet of decorative paper 16. These decorative paper sheets are commonly manufactured from high quality 50-125 ream weight, pigment filled, alpha cellulose paper impregnated with a water alcohol or water solution of melamine-formaldehyde resin. However, prior to impregnation with the resin, the decorative paper 16 is bilaterally creped in both the x and y directions. In accordance with a preferred embodiment of the present invention, the paper 16 is creped using the x crepe system of Cindus, Inc. Specifically, x crepe describes a creping system in which crossing sets of creping crinkles diagonally disposed in the direction of the web are formed in a paper sheet. Sheets of this type, which are universally stretchable, have been made in accordance with the teachings of a number of patents including U.S. Pat. No. 2,008,181 Kemp, U.S. Pat. No. 2,008,182 Kemp, U.S. Pat. No. 2,071,347 Kemp, U.S. Pat. No. 2,399,256 Rowe, U.S. Pat. No. 2,567,967 Rowe, U.S. Pat. No. 2,610,935 Rowe, and U.S. Pat. No. 3,476,644 Krehnbrink. These sheets further provide for contraction or compression thereof due to the crinkled nature of the creping.

The creping process is described in detail in the foregoing patents. Briefly, the process comprises the steps of dunking the paper sheet in water, applying a rosin to the sheet so that it will adhere to a drum and finally peeling the sheet off a drum with a blade which causes the paper to crinkle much like paint which is scraped from a surface.

The creped decorative paper 16 is then impregnated with a water alcohol or water solution of melamine-formaldehyde resin. It has been found that the x creped decorative paper used in accordance with a preferred embodiment of the present invention absorbs resin more slowly than the standard papers used in the industry. Papers suitable for x creping are generally sized which reduces the saturability of the paper. As such, decorative paper sheets with a resin content of only approximately 30% to 35% have been used in accordance with the present invention (conventional decorative sheets commonly have a resin content of approximately 50% or greater). The resulting surface performance is, however, similar to high pressure laminate incorporating standard papers with a resin content of 50%. The x creped decorative paper in accordance with this embodiment of the present invention exhibits stretch of approximately 20% to 35%.

The resin impregnated decorative paper 16 is subsequently dried, partially cured, and finally cut into sheets. The pigment filled, alpha cellulose paper of the decorative paper sheet, may include a solid color, a decorative design, or a photo-gravure reproduction of natural materials, such as, wood, marble, leather, etc. The aesthetic characteristics of the cellulose paper are revealed as the laminate's decorative design upon completion of the decorative laminate.

The core layer 14 is preferably formed from a single phenolic resin impregnated sheet of kraft paper 18, although other materials may be used without departing from the spirit of the present invention. The core layer 14 is constructed to be very thin so as to minimize the thickness of the resulting laminate 10, while similarly providing a stable structural member, and improve the compound formability of the resulting decorative laminate 10. With this in mind, the core layer 14 includes a single sheet of phenolic resin impregnated kraft paper 18. In accordance with a preferred embodiment of the present invention, before x creping the kraft paper had a basis weight of 123.7 g/m², however, those skilled in the art will appreciate that the weight may be varied without departing from the scope of the present invention.

While a single sheet of kraft paper is disclosed above in accordance with a preferred embodiment of the present invention, it has been found that multiple sheets of kraft paper may be used without departing from the spirit of the present invention. For example, 2 sheets of kraft paper produce very good results, while 3 and 4 sheet core layers are compound formable but do not produce the detail of thinner core layers. In accordance with previously tested embodiments of the present invention, a compound formable laminate including a single core sheet and a single decorative sheet has a thickness of approximately 0.483 mm, a compound formable laminate including two core sheets and a single decorative sheet has a thickness of approximately 0.737 mm, a compound formable laminate including three core sheets and a single decorative sheet has a thickness of approximately 1.054 mm and a compound formable laminate including four core sheets and a single decorative sheet has a thickness of approximately 1.422 mm.

As with the decorative paper 16 discussed above, the kraft paper 18 of the core layer 14 is creped to provide "crinkling" in both the x and y directions. The paper 18 is also creped using the x crepe system of Cindus, Inc. The resulting x creped kraft paper is capable of stretching to 20% to 50%.

The x creped kraft paper 18 is then impregnated throughout with a phenolic resin and is partially cured (β -staged). It has been found that the x creped kraft paper 18 used in accordance with a preferred embodiment of the present invention absorbs resin more quickly than the non-creped kraft paper. As such, kraft paper with a resin content of approximately 44% to 50% has been used in accordance with the present invention, however, lower resin content is desirable to reduce "flash" or excess resin exuding from the laminate during the pressing step. As a matter of fact, laminate with a resin content of 37% has been produced in accordance with the present invention and it is expected that number may be even further reduced with modified treating techniques. With this in mind, it is contemplated that kraft paper with a resin content of between approximately 20% and 50% may be employed in accordance with the present invention.

While x creped kraft and decorative papers are disclosed in accordance with a preferred embodiment of the present invention, other creped papers offering bilateral stretching may be used in accordance with the present invention. For example, it is contemplated that Italian "moulding paper" may be used in accordance with the present invention. "Moulding paper" is a finely creped paper offering stretch characteristics required in accordance with the present invention. For example, Cartiere Cariolaro SpA and Gruppo X di X Gruppo manufacture such a paper. Information concerning the paper may be readily found at www.cariolaro.com/cariolaro/Eng//MouldPaper.htm.

The decorative laminate 10 is formed in much the same manner as conventional decorative laminates. The layers are first stacked as a laminate lay-up and placed between steel plates. The laminate lay-up is then subjected to temperatures in the range of 110 ° C to 155 ° C and pressure of about 5.52 MPa to 11.03 MPa for a time sufficient to consolidate the laminate and cure the resins (generally about 25 minutes to an hour). The heat and pressure used generally correspond to a post-forming cycle or even a "greener" post-forming cycle.

The pressure and heat force the resin in the paper sheets to flow, cure and consolidate the sheets into a unitary laminated mass referred to in the art as a high pressure decorative laminate. Generally, more than one laminate is formed at one time. Multiple laminates are formed by inserting a plurality of assembled sheets in a stack. Release sheets are positioned between the assembled sheets to separate the various laminates stacked together. After consolidation, the release sheets allow the individual laminates to be separated.

Once formed, the decorative laminate 10 may be used in the construction of a variety of structures through a compound forming process providing for compound forming in a three-dimensional space. The compound forming of the decorative laminate 10 is facilitated by the laminate's ability to both expand and contract without cracking or buckling during heating, forming and subsequent cooling.

For example, and as respectively shown in Figures 2 and 3, the decorative laminate 10 may be compound formed into the shape of a hemisphere (exhibiting expansion of the decorative laminate in accordance with the present invention) or "peanut" (exhibiting both expansion and contraction in accordance with the present invention).

With reference to Figure 2, and in accordance with a preferred embodiment of the present invention, the process for compound forming the decorative laminate 10 into the shape of a hemisphere is accomplished through the use of a pneumatic pressure press 20. The formed laminate 10 is positioned over a hemisphere shaped molding surface 22 with the decorative surface 24 of the laminate 10 facing away from the hemisphere shaped molding surface 22. A silicone membrane 26 is positioned on the opposite side of the formed laminate 10 and a heat source 30 is positioned above the formed laminate 10 and the membrane 26.

Once the components are properly positioned, the laminate 10 is heated to a temperature of approximately 85 ° C to 160 ° C, preferably approximately 115 ° C, and pressure is applied in the direction of the molding surface 22. It has been found that heating at higher temperatures may cause discoloration or blistering of the laminate. While a temperature of 115 ° C is disclosed in accordance with a preferred embodiment of the present invention, compound forming in accordance with the present invention has been performed at surface temperatures as low as 85 ° C or as high as 160 ° C, and those skilled in the art will appreciate that the surface temperatures utilized in the practice of the present invention may be varied to suit specific requirements.

As the formed laminate 10 is forced downwardly over the molding surface 22, the x-creped sheets of the formed laminate 10 stretch to conform to the surface of the molding surface 22. The molded laminate is then permitted to cool, setting the resin in the shape of the molding surface, and the pressure is released.

In accordance with a preferred embodiment of the present invention, a molding assembly developed by ItalPresse USA, Inc. is used. The press generally operates at 0.4 to 0.5 MPa pressure with a silicone membrane that forces the laminate into the shape of the mold. However, those skilled in the art will appreciate the variety of molding techniques and apparatuses which may be used in accordance with the present invention without departing from the scope thereof, for example, membrane thermoforming, vacuum thermoforming (including plug assisted forming), post-forming, hydroforming, insert injection molding, drape forming and compression molding (including matched mold forming).

The formed laminate may similarly be molded in a manner requiring contraction and expansion (or only contraction) of the laminate. For example, and with reference to Figure 3, a "peanut" shaped molding surface 32 is disclosed. As with the molding processes discussed above, the formed laminate 10 is positioned over the "peanut" shaped molding surface 32 with the decorative surface 24 of the laminate 10 facing away from the molding surface 32, the silicone membrane 34 positioned on the opposite side of the formed laminate 10 and a heat source 36 positioned above the formed laminate 10 and the membrane 34. The laminate 10 is then heated to a temperature of approximately 115 ° C and pressure is applied in the direction of the molding surface 32. As the formed laminate 10 is forced downwardly over the molding surface 32, the x-creped sheets of the formed laminate 10 are stretched over the convex portions 38 of the molding surface 32 and contracted over the concave portions 40 of the molding surface 32. The molded laminate is then permitted to cool, setting the resin in the shape of the molding surface, and the pressure is released.

The embodiments disclosed above present simple compound forming in the shape of a hemi-sphere or "peanut", however, those skilled in the art will appreciate the virtually limitless shapes into which decorative laminates may be compound formed in accordance with the present invention. For example, it is contemplated that compound formed laminates in accordance with the present invention may be used as office furniture, including recent ergonomic designs incorporating compound radii; furniture with simple or compound radii; formed door fronts, drawer fronts, moldings, and panels for kitchen applications; architectural doors and formed facings; worktops with continuously formed edges, including, kitchen counters, commercial work surfaces, tables, etc.; wrap moldings; partitions with continuously formed edges; formed shower and catch basins; formed wall panels; ceiling panels; formed automotive composites consisting of a compound formable laminate decorative surface and a plastic substrate; formed institutional furniture components, including, desk seats, arm rests, etc.; formed case goods; formed store, and other institutional, fixtures; cafeteria food trays; dinnerware; decorative appliques and or objects of art.

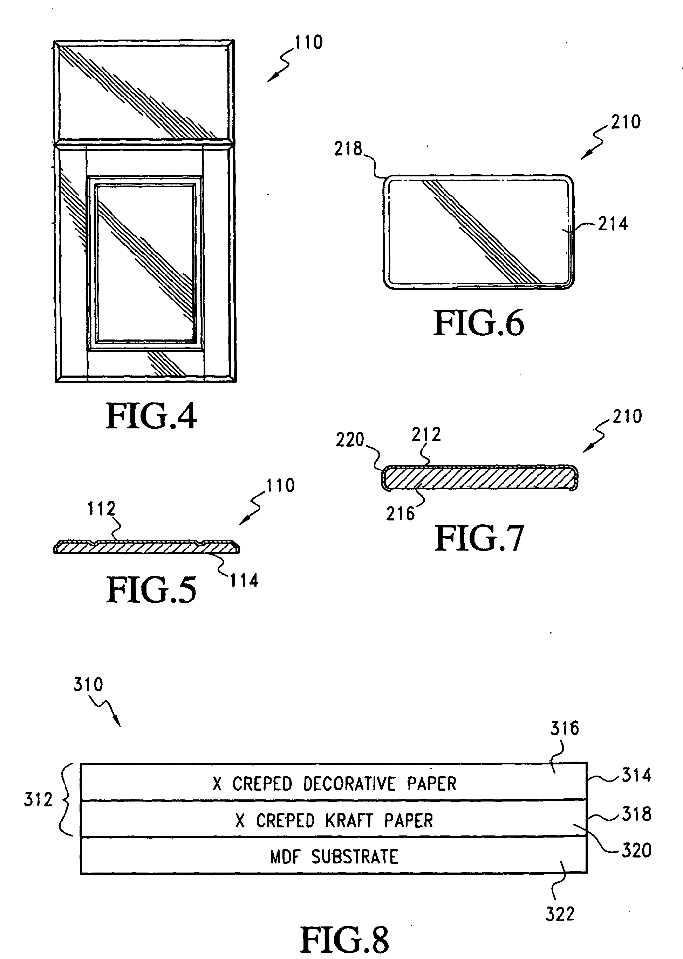

For example, and with reference to Figures 4 and 5, a cabinet door 110 is disclosed in accordance with the present invention. The cabinet door 110 includes a compound formed decorative laminate 112 secured to a medium density fiberboard (MDF) substrate 114. The surface of the cabinet door 110 includes a plurality of distinct concave and convex surfaces extending in various directions and formed within a three-dimensional space.

The cabinet door 110 is fabricated in much the same manner as described above with reference to Figures 2 and 3. Specifically, the compound formable decorative laminate 112 is first fabricated through the application of heat and pressure intended to cure and consolidate the resin impregnated layers making up the decorative laminate 112. Once the compound formable decorative laminate 112 is fabricated, it undergoes a compound forming process in which the decorative laminate 112 is molded to conform with the shape of the substrate 114 to which it is to be bound. Prior to molding, an adhesive is applied to the substrate 114 such that the laminate 112 will be adhesively bound to the substrate 114 upon the completion of the compound forming molding process. It is, however, contemplated that adhesive may be applied to the laminate backside surface rather than, or in addition to, the substrate.

In order to ensure that the exposed surface of the cabinet door 110 is completely covered with decorative laminate 112, the decorative laminate 112 is sized to be slightly larger than the substrate 114 to which it is molded and bound. As such, any edges of the decorative laminate 112 extending beyond the substrate 114 are trimmed off prior to considering the cabinet door a final product.

When used as a surfacing for kitchen cabinets, it is contemplated that compound formed laminates in accordance with the present invention will replace vinyl clad cabinet doors with a substantially more durable surface. Similarly, wood doors may also be replaced with compound molded laminates.

A further exemplary use of the present technology is disclosed in Figures 6 and 7 where a tabletop 210 having a compound formed decorative laminate surface 214 is disclosed. The tabletop 210 includes a compound formed decorative laminate 212 secured to a medium density fiberboard (MDF) substrate 216. The use of the present technology permits one to fully cover the tabletop 210 with a single sheet of compound formable decorative laminate 212. The substrate 216 of the tabletop 210 is prepared with rounded corners 218 and curved, or beveled, edges 220. The corners 218 and edges 220 provide a surface about which the compound formable decorative laminate 212 may be stretched and compressed, and those skilled in the art will appreciate different tabletop surface shapes which would be appropriate for application of the present technology.

The tabletop 210 is fabricated in much the same manner as described above with reference to Figures 2, 3, 4 and 5. Specifically, the compound formable decorative laminate 212 is first fabricated through the application of heat and pressure intended to cure and consolidate the resin impregnated layers making up the decorative laminate 212. Once the compound formable decorative laminate 212 is fabricated, it undergoes a compound forming process in which the decorative laminate 212 is molded to conform to the shape of the substrate 216 to which it is to be bound. The molding process causes the laminate 212 to bend, stretch and compress about the corners 218 and edges 220 of the substrate 216. Prior to molding, an adhesive is applied to the substrate 216 or laminate 212 such that the laminate 212 is adhesively bound to the substrate 216 upon the completion of the compound forming molding process.

In order to ensure that the exposed surface of the tabletop 210 is completely covered with decorative laminate 212, the decorative laminate 212 is sized to be slightly larger than the substrate 216 to which it is formed and bound. With this in mind, the edges of the decorative laminate 212 may either be trimmed away after molding or wrapped around and under the substrate 216 during the molding process (see Figures 6 and 7). Where the edges of the decorative laminate 212 are permitted to extend beyond the substrate 216, they are trimmed off prior final packaging of the tabletop 210.

In accordance with an alternate embodiment of the present invention, and in situations where the compound formed laminate will require extra durability, the laminate may be formed with an overlay sheet and/or additional x creped kraft sheets in the core layer. With regard to the overlay sheet, the overlay sheet is preferably a melamine impregnated paper sheet and is similarly treated to improve its stretch characteristics. Once pressed and heated to form a complete decorative laminate, the resin in the overlay paper layer forms a barrier preventing damage to the underlying decorative sheet. The overlay paper layer also dictates the surface characteristics of the final decorative laminate. For example, the composition of the overlay layer helps to dictate the decorative laminates resistance to chemical agents, heat, light, shock and abrasion.

In those instances where it is determined that either an overlay sheet or additional core layer sheets should be incorporated into the laminate, it has been found that the formed laminate is still highly suited for compound forming as discussed above. However, it has also been found that such laminates are not quite capable of bending in radii as tight as with the two sheet laminate discussed above.

While specific paper types are disclosed in accordance with preferred embodiments of the present invention, other paper types may be used without departing from the spirit of the present invention. Similarly, specific operating parameters and manufacturing techniques are described above, and those skilled in the art will appreciate the variations possible within the scope of the present invention.

With reference to Figure 8, an alternate embodiment of the present invention is disclosed. This embodiment includes a compound formable laminate panel 310 generally composed of a resin impregnated layer(s) 312 and an MDF substrate 322.

More specifically, and in accordance with a preferred embodiment of the present invention, the compound formable laminate panel 310 includes a resin impregnated decorative layer 314 composed of a bilaterally stretchable decorative paper 316, a resin impregnated core layer 318 composed of a bilaterally stretchable kraft paper 320 and a highly flexible medium density fiberboard substrate 322. While both decorative paper and kraft paper are disclosed in accordance with a preferred embodiment of the present invention, it is contemplated that a single sheet of decorative paper may be used without departing from the scope of the present invention.

With reference to the decorative paper 316 of the decorative layer 314, the decorative paper sheet 316 is commonly manufactured from high quality 50-125 ream weight, pigment filled, alpha cellulose paper impregnated with a water alcohol or water solution of melamine-formaldehyde resin. However, prior to impregnation with the resin, the decorative paper 316 is treated such that is bilaterally stretchable in both the x and y directions. In accordance with a preferred embodiment of the present invention, the decorative paper is treated by x creping, although other comparable treating techniques may be used without departing from the scope of the present invention.

The stretchable decorative paper 316 is then impregnated with a water alcohol or water solution of melamine-formaldehyde resin. The resin impregnated decorative paper 316 is subsequently dried, partially cured, and finally cut into sheets. The pigment filled, alpha cellulose paper of the decorative paper sheet may include a solid color, a decorative design, or a photo-gravure reproduction of natural materials, such as, wood, marble, leather, etc. The aesthetic characteristics of the cellulose paper are revealed as the laminate's decorative design upon completion of the decorative laminate.

The core layer 318 is preferably formed from a single sheet of phenolic resin impregnated kraft paper 320. The core layer 318 is constructed to be very thin so as to minimize the thickness of the resulting laminate 310, while similarly providing a stable structural member and improving the compound formability of the resulting decorative laminate 310. In accordance with a preferred embodiment of the present invention, before x-creping the kraft paper 320 had a basis weight of 123.7 g/m², however, those skilled in the art will appreciate that the weight may be varied without departing from the scope of the present invention.

As with the decorative paper sheet 316 discussed above, the kraft paper 320 of the core layer 318 is treated to impart desired softness and stretchability in both the x and y directions. The stretchable kraft paper 320 is then impregnated throughout and dried to remove solvent. The phenolic resin is then converted into a thermoset state during the pressing or compression molding step.

The fiberboard substrate 322 used in accordance with this embodiment is approximately 0.3175 cm thick. In accordance with a preferred embodiment of the present invention, the fiberboard substrate 322 is medium density fiberboard (MDF). The MDF is specially manufactured to permit forming thereof through the use of a match mold press. While the MDF is used in accordance with a preferred embodiment of the present invention, other similar formable MDFs may be used without departing from the scope of the present invention.

The low pressure decorative laminate panel 310 of the present embodiment is formed by stacking the fiberboard substrate 322, decorative paper 316 and kraft paper 320, and placing the same between steel plates. The laminate stack is then subjected to temperatures in the range of 115 ° C to 160 ° C and pressure between about 1.03 MPa to 2.93 MPa for a time sufficient to consolidate the laminate panel and cure the resins.

The pressure and heat force the resin in the paper sheets to flow, cure and consolidate the sheets into a unitary laminated mass referred to in the art as a decorative low pressure laminate. In addition, resin also flows into the substrate to establish the bond line. Low pressure decorative laminates in accordance with the present invention may be formed in a continuous manner through the use of a conveyor type processing assembly or a stepwise process using conventional pressing assemblies.

Once formed, and as discussed above with reference to the first disclosed embodiment, the decorative laminate panel 310 may be used in the construction of a variety of structures through a forming process providing for compound forming in three dimensions. The compound forming process also permits formation of a decorative laminate panel which requires both the expansion and contraction of the previously formed laminate. The forming process may be the same as previously discussed above, or it may include the use of a high-pressure matched mold press.

While a preferred embodiment of the present invention combines the MDF with the kraft paper and decorative paper prior to the application of heat and pressure, it is contemplated that the MDF may be utilized as a conventional substrate which is adhesively bound to a decorative laminate which has previously been consolidated through the application of heat and pressure. When employed in this manner, the MDF is adhesively bound to either high pressure decorative laminate or low pressure decorative laminate, and the entire assembly is then subjected to a match mold press for compound molding in accordance with the present invention.

In accordance with a further embodiment of the present invention, principles of the present invention may be applied in producing a woodgrain decorative paper or abstract pattern decorative paper adapted for compound forming as discussed above. This further embodiment employs print base papers with saturabilities (a 30 second Cobb value equal to approximately 20.0) suitable for x creping. The paper is first x creped to provide isotropic extensibilities > 20.0%. The paper is then calendared to provide the paper with a smooth, printable surface. The paper is finally rotogravure printed to apply the desired pattern. The resulting paper has both the required pattern fidelity and extensibility required for subsequent manufacture into a high quality compound formable laminate.

While the preferred embodiments have been shown and described, it will be understood that there is no intent to limit the invention by such disclosure, but rather, is intended to cover all modifications and alternate constructions falling within the scope of the invention as defined in the appended claims.

In the present specification "comprises" means "includes or consists of" and "comprising" means "including or consisting of".

## Claims

1. A compound formable decorative laminate (10) comprising:
a resin impregnated decorative layer (12) composed of a bilaterally stretchable decorative paper (16) which is capable of being stretched by at least 20%; and
a resin impregnated core layer (14) composed of a bilaterally stretchable kraft paper (18) which is capable of being stretched by at least 20%.

2. The decorative laminate according to claim 1, wherein the decorative paper (16) is impregnated with a melamine resin.

3. The decorative laminate according to claim 1, wherein the decorative paper (16) is alpha cellulose paper.

4. The decorative laminate according to claim 1, wherein the decorative paper (16) has a resin content of approximately 30% to approximately 35%.

5. The decorative laminate according to claim 1, wherein the decorative paper (16) is alpha cellulose paper impregnated with melamine resin to a resin content of approximately 30% to approximately 35%.

6. The decorative laminate according to claim 1, wherein the core layer (18) is impregnated with a phenolic resin.

7. The decorative laminate according to claim 1, wherein the decorative paper (16) is x creped so as to impart stretchability thereto.

8. The decorative laminate according to claim 1, wherein the kraft paper (18) is x creped so as to impact stretchability thereto.

9. The decorative laminate according to claim 1, wherein the core layer (14) includes multiple sheets of bilaterally stretchable kraft paper.

10. A laminate lay-up comprising a decorative laminate according to any preceding claim.

11. A decorative laminate panel, comprising a compound formable decorative laminate according to any one of claims 1 to 10, and a compound formable substrate to which the laminate is bound.

## Patentansprüche

1. Dreidimensional formbares Dekorlaminat (10), umfassend:
eine harzimprägnierte Dekorschicht (12), die aus einem bilateral streckbaren Dekorpapier (16) zusammengesetzt ist, das um mindestens 20 % gestreckt werden kann, und
eine harzimprägnierte Kernschicht (14), die aus einem bilateral streckbaren Kraft-Papier (18) zusammengesetzt ist, das um mindestens 20 % gestreckt werden kann.

2. Dekorlaminat nach Anspruch 1, wobei das Dekorpapier (16) mit einem Melaminharz imprägniert ist.

3. Dekorlaminat nach Anspruch 1, wobei das Dekorpapier (16) α-Cellulosepapier ist.

4. Dekorlaminat nach Anspruch 1, wobei das Dekorpapier (16) einen Harzgehalt von ungefähr 30 % bis ungefähr 35 % hat.

5. Dekorlaminat nach Anspruch 1, wobei das Dekorpapier (16) α-Cellulosepapier ist, das mit Melaminharz auf einen Harzgehalt von ungefähr 30 % bis ungefähr 35 % imprägniert ist.

6. Dekorlaminat nach Anspruch 1, wobei die Kernschicht (18) mit einem Phenolharz imprägniert ist.

7. Dekorlaminat nach Anspruch 1, wobei das Dekorpapier (16) x-gekreppt ist, um ihm Streckbarkeit zu verleihen.

8. Dekorlaminat nach Anspruch 1, wobei das Kraft-Papier (18) x-gekreppt ist, um ihm Streckbarkeit zu verleihen.

9. Dekorlaminat nach Anspruch 1, wobei die Kernschicht (14) mehrere Lagen bilateral streckbares Kraft-Papier enthält.

10. Laminatstruktur, umfassend ein Dekorlaminat nach einem der vorhergehenden Ansprüche.

11. Dekorlaminatplatte, umfassend ein dreidimensional formbares Dekorlaminat nach einem der Ansprüche 1 bis 10 und ein dreidimensional formbares Substrat, an welches das Laminat gebunden ist.

## Revendications

1. Stratifié décoratif formable composé (10), comprenant :
une couche décorative imprégnée de résine (12) composée d'un papier décoratif étirable bilatéralement (16) qui est capable d'être étiré d'au moins 20% ; et
une couche interne imprégnée de résine (14) composée d'un papier kraft étirable bilatéralement (18) qui est capable d'être étiré d'au moins 20%.

2. Stratifié décoratif selon la revendication 1, dans lequel le papier décoratif (16) est imprégné d'une résine mélamine.

3. Stratifié décoratif selon la revendication 1, dans lequel le papier décoratif (16) est du papier d'alpha-cellulose.

4. Stratifié décoratif selon la revendication 1, dans lequel le papier décoratif (16) possède une teneur en résine d'environ 30% à environ 35%.

5. Stratifié décoratif selon la revendication 1, dans lequel le papier décoratif (16) est du papier d'alpha-cellulose imprégné de résine mélamine à une teneur en résine d'environ 30% à environ 35%.

6. Stratifié décoratif selon la revendication 1, dans lequel la couche interne (18) est imprégnée d'une résine phénolique.

7. Stratifié décoratif selon la revendication 1, dans lequel le papier décoratif (16) est soumis à un crêpage x qui lui confère une extensibilité.

8. Stratifié décoratif selon la revendication 1, dans lequel le papier kraft (18) est soumis à un crêpage x qui lui confère une extensibilité.

9. Stratifié décoratif selon la revendication 1, dans lequel la couche interne (14) renferme de multiples feuilles de papier kraft étirable bilatéralement.

10. Assemblage stratifié comprenant un stratifié décoratif selon l'une quelconque des revendications précédentes.

11. Panneau stratifié décoratif, comprenant un stratifié décoratif formable composé selon l'une quelconque des revendications 1 à 10, et un substrat formable composé auquel le stratifié est relié.
